# EUROPÄISCHE PATENTSCHRIFT

(11) **EP 2 246 178 B1**
(45) Veröffentlichungstag und Bekanntmachung des Hinweises auf die Patenterteilung: **26.09.2012**
(21) Anmeldenummer: 10161197.8
(22) Anmeldetag: 27.04.2010
(51) Int. Cl.: B29C 65/06, B29C 65/08

(54) **Anbauteil zur Verbindung mit einem Bauteil durch torsionales Ultraschallschweißen**
Extension component for connection with a component by means of torsional ultrasound welding
Pièce rapportée à connecter à un composant à l'aide d'une soudure par ultrasons torsionnelle

(30) Priorität: 27.04.2009 DE 102009018747
(43) Veröffentlichungstag der Anmeldung: 03.11.2010
(73) Patentinhaber: Faurecia Exteriors GmbH, 31655 Stadthagen (DE)
(72) Erfinder: Bücker, Dirk, 41199, Mönchengladbach 3 (DE); Görse, Hergen, 91154, Roth (DE); Sautner, Anton, 91757, Treuchtlingen (DE); Fenzel, Robert, 91785, Pleinfeld (DE); Helfenberger, Andreas, 91781, Weißenburg (DE)
(74) Vertreter: Uppena, Franz

(56) Entgegenhaltungen:
- EP-A1- 1 410 988
- EP-A1- 1 930 148
- JP-A- 11 025 644

## Beschreibung

Die Erfindung betrifft ein Anbauteil mit zumindest einer für eine Verschweißung mit einem Bauteil vorgesehenen Schweißstelle, wobei die Verschweißung mit dem an sich bekannten torsionalen Ultraschallschweißverfahren erfolgen soll, bei welchem eine Sonotrode zur Übertragung der den Schweißvorgang erzeugenden Schwingungen auf die Schweißstelle aufgesetzt wird, wodurch die Trennebene zwischen Anbauteil und Bauteil schmilzt und das Anbauteil mit dem Bauteil verschweißt.

### Stand der Technik:

Eine etablierte Technik zum Verbinden von Bauteilen aus Kunststoff ist das Schweißen. Hierzu werden diverse Möglichkeiten zur Energieeinbringung genutzt. Zum Beispiel Reibschweißen oder Ultraschallschweißen.

Speziell bei der Anwendung im automobilen Außenbereich liegen, aufgrund der Möglichkeiten, die die neuen Materialeigenschaften beim Spritzgießen bieten, die zur Zeit gängigen Wandstärken bei der Verarbeitung im Bereich von >= 3,0 mm. Die hierbei standardmäßig zum Einsatz kommende Materialart ist, aufgrund des Preises, mit Talkum verstärktes PP.

Aufgrund der dünnen Wandstärke sinken Kosten und Gewicht des Bauteils. Da jedoch speziell PP gegenüber anderen technischen Kunststoffen unter Last kriechfähig ist und über ein geringes E-Modul verfügt, gleichzeitig aber die an die Bauteilverschweißung gestellten Forderungen von Haltekräften an den geschweißten Bauteilverbund von > 200 N je Schweißstelle unverändert bleiben, ist es oft nicht möglich die Bauteile fehlerfrei zu verbinden. Hierbei behindern zwei Einflussfaktoren eine abzeichnungsfreie Verschweißung:
1.) Prozessbedingte Fehlstellen
   Die eingebrachte Energie zur Aufschmelzung und innigen Verbindung der Trennebene wirkt sich durch das Bauteil hindurch derart aus, das die Oberfläche in Folge des Schwindungsunterschieds beim Abkühlen des Bauteils deformiert und eine Fehlstelle ausbildet.
2.) Lastbedingte Fehlstellen
   Die beim Schweißen punktartig in den Bauteilverbund eingebrachten Kräfte führen an der Oberfläche, bei zu geringer Bauteildicke und E-Modul des Materials, zu sichtbaren Deformationen. Die Oberfläche gibt unter der Last der eingebrachten Spannungen nach und bildet eine sichtbare Fehlstelle aus.

Eine Entwicklung um diesen Effekt zu verhindern, ist das torsionale Ultraschallschweißen, wie es in der EP 1 930 148 A1 und der noch unveröffentlichten DE 10 2009 011273 A1 beschrieben ist. Dabei wird das unter der Sonotrode liegende obere Bauteil in rotatorische Schwingung im Frequenzbereich des Ultraschalls versetzt. Die Schwingung wird durch das obere Bauteil weitergegeben und direkt in der Trennebene zwischen oberen und unteren Bauteil in Wärme umgesetzt. Das obere Bauteil wird zwar durch seine innere Dämpfung erwärmt aber nicht aufgeschmolzen. Hierdurch reduziert sich zum einen die auf das untere Bauteil wirkende Hitze, zum anderen wird die wirksame Verbindungsfläche zur Krafteinleitung von punktartig in eine linien- und/oder flächenartige Verbindung gewandelt. Als Resultat sind abzeichnungsfreie Verbindungen bei polyolefinen Werkstoffen auch unter 3,0 mm Wanddicke möglich. Die Entstehung von Fehlstellen konnte so verhindert werden.

In dieser Beschreibung bezeichnen die Begriffe oberes Bauteil und Anbauteil, sowie unteres Bauteil und Bauteil, die gleichen Gegenstände. Auf das Anbauteil, bzw. auf das obere Bauteil wird die Sonotrode aufgesetzt, um das unter dem Anbauteil sich befindliche Bauteil mit dem Anbauteil zu verschweißen.

Kritik am Stand der Technik:
Die als torsionales Schweißen bekannte Ultraschallschweißtechnik ist bisher nur an relativ kleinen, leichten Bauteilen anwendbar. Versucht man ein großes und flächiges Bauteil in Schwingung zu versetzten, ist das Trägheitsmoment der Fläche in der Regel so groß, dass es nicht zu einer Übertragung der Schwingung kommt. Der Widerstand des zu verschweißenden Teils gegen den eingebrachten Drehimpuls ist so groß, dass sich die Energie nicht in die Trennebene überträgt, sondern schon im oberen Bauteil freigesetzt wird. Es schmilzt die Sonotrode an dem Bauteil an. Die Trennebene zwischen den Bauteilen bleibt unverschweißt.
Die Bauteile werden nicht verbunden. Dies liegt daran, dass die Fläche des Bauteils quadratisch in die Gleichung für das Trägheitsmoment eingeht, während die Masse des Bauteils direkt proportional das Trägheitsmoment bestimmt.

Der Erfindung liegt die Aufgabe zugrunde, ein großes und flächiges Anbauteil nach dem Oberbegriff des Anspruchs 1 so zu verbessern, dass es durch torsionales Ultraschallschweißen mit einem Bauteil verschweißt werden kann. Ferner liegt der Erfindung die Aufgabe zugrunde, große und flächige Teile dem Verschweißen mittels torsionaler Schwingung zu erschließen.

Erfindungsgemäß wird diese Aufgabe durch die Merkmale des Anspruchs 1 gelöst.

Erfindungsgemäß wird vorgeschlagen, dass die Schweißstelle auf dem Anbauteil schwingungstechnisch von der restlichen Fläche des Anbauteils entkoppelt ist. Dies hat zur Folge, dass die von der Sonotrode eingebrachte Energie weitestgehend auf die Schweißstelle übertragen wird und nicht in der restliche Fläche des Anbauteils freigesetzt wird. Die eingebrachte Energie wird dadurch weitestgehend auf die Trennebene zwischen Anbauteil und Bauteil übertragen, wodurch diese aufschmilzt und das Anbauteil mit dem Bauteil verschweißt. Die Sonotrode schmilzt nicht am Anbauteil an.

In einer ersten Ausgestaltung wird vorgeschlagen, dass die Schweißstelle mittels Ausdünnungen und/oder Durchbrüche von der restlichen Fläche entkoppelt ist. Ausdünnungen und/oder Durchbrüche lassen sich bei der Herstellung der Anbauteile leicht einbringen. Wenn es sich um Teile aus Kunststoff handelt, können diese Ausdünnungen und/oder Durchbrüche in die Spritzform integriert werden. In jedem Fall ist durch diese Ausdünnungen und/oder Durchbrüche die Schweißstelle schwingungstechnisch von der restlichen Fläche des Anbauteils entkoppelt.

Bevorzugt sind die Ausdünnungen und/oder Durchbrüche koaxial um die Schweißstelle herum angeordnet, damit die Schweißstelle in allen Richtungen entkoppelt ist.

In einer Ausführungsform sind die Ausdünnungen eine Ringnut. Diese Ringnut umgibt die Schweißstelle koaxial. Die Tiefe der Ausdünnungen ist generell so zu wählen, dass einerseits eine hinreichende Entkoppelung stattfindet und andererseits eine ausreichende Festigkeit der Schweißstelle mit der restlichen Fläche des Anbauteils gegeben ist.

Die Ausdünnungen können in ihrer Tiefe von einer Anfangstiefe zu einer Endtiefe stetig zu- oder abnehmen. Hierdurch lässt sich das Schwingungsverhalten genau einstellen.

Vorteilhaft sind die Ausdünnungen und/oder Durchbrüche gegeneinander versetzt angeordnet. Auch durch diese Maßnahme ist das Schwingungsverhalten exakt einstellbar.

In einer anderen bevorzugten Ausgestaltung ist die Schweißstelle von einer U-förmigen Ausdünnung oder Durchbruch umgeben. Hierdurch ist die Schweißstelle an einer Seite voll mit der restlichen Fläche des Anbauteils verbunden.

In einer anderen Ausgestaltung ist die Schweißstelle von einer in Umfangsrichtung um die Schweißstelle herum angeordneten im Querschnitt gebogenen oder zickzackförmigen Ausdünnung umgeben. Die Schweißstelle kann hierdurch im Anbauteil nahezu frei Schwingen, ohne dass die Schwingung auf die restliche Fläche des Anbauteils übertragen wird.

In einer weiteren vorteilhaften Ausführungsform wird vorgeschlagen, die zur Einkopplung nutzbare Fläche zwischen Sonotrode und Anbauteil zu vergrößern. Je größer diese Fläche ist, zum Beispiel durch Abrundung der Aussenkanten, Aufrauhung oder Verzahnung der Flächen, desto besser ist der Eingriff der Sonotrode und umso besser ist die Einkopplung der Schwingung in das obere Bauteil bzw. das Anbauteil gewährleistet.

Bevorzugt weist die Oberfläche der Schweißstelle und/oder der die Schweißstelle umgebende Rand eine gegenüber einer ebenen Fläche vergrößerte nutzbare Einkopplungsfläche für die Sonotrode auf.

Zur weiteren besseren Einkopplung der Schwingungen ist vorteilhaft die Bauteilform des Anbauteils im Bereich des Aufsatzpunktes der Sonotrode an die Kontur einer nicht ebenen Sonotrode angepasst. Hierfür ist eine Anpassung der Sonotrode erforderlich.

Vorteilhaft ist die Einkopplungsfläche für die Sonotrode durch Abrundung der Aussenkanten, Aufrauhung oder Verzahnung zu vergrößern.

Neben der schwingungstechnischen Abkoppelung der Schweißstelle, oder zusätzlich zu ihr, wird in einer vorteilhaften Weiterbildung der Erfindung vorgeschlagen, dass im Bereich der Schweißstelle die Einkopplungsfläche für die Sonotrode größer ist als die auf der gegenüberliegenden Seite angeordnete Auflagefläche, mit der das Anbauteil auf das Bauteil auflegbar ist. Hierdurch ist die Ankopplung der Sonotrode an das Anbauteil verbessert und die übertragene Energie wird besser an die Trennebene übertragen.

Bevorzugt weist das Anbauteil an die dem Aufsatzpunkt der Sonotrode, gegenüberliegenden Seite eine gegenüber einer ebenen Fläche verkleinerte Auflagefläche auf, wobei bevorzugt auf der Auflagefläche Erhebungen und/oder Vertiefungen angeordnet sind. Die Fläche unterhalb der Auflagefläche der Sonotrode, bzw. oberhalb der Erhebungen und/oder Vertiefungen, ist somit über die Ebene der umliegenden Flächen angehoben und dadurch verringert sich die wirksame Reibfläche. Ein schnelleres Aufschmelzen und infolge dessen, ein besseres Verschweißen der Trennebene ist die Folge.

An einem Kraftfahrzeug werden viele Bauteile aus Kunststoff verwendet, wie zum Beispiel Stoßfänger oder Radkasten. Aufgrund der unterschiedlichsten Ausstattungsvarianten ist es erforderlich, an dem Bauteil Anbauteile zu befestigen. Ein derartiges Anbauteil ist zum Beispiel bei einem Stoßfänger ein Halter zur Aufnahme eines Sensors zur Abstandsmessung. Da ein Sensor nicht direkt am Stoßfänger befestigt werden kann, wird er in den Halter aus Kunststoff eingesetzt, wobei der Halter mit dem Stoßfänger verbunden wird.

Bevorzugt bestehen das Anbauteil und das Bauteil aus Kunststoff und sind bevorzugt ein Innen- oder Außenteil eines Kraftfahrzeugs. Das Bauteil ist zum Beispiel ein Stoßfänger, Heckklappe, Kotflügel, Tür, Seitenwand, Dach oder der Unterboden. Anbauteile sind zum Beispiel Halter zur Aufnahme einer Abstandsmessvorrichtung.

Bevorzugt ist die Verschweißung unterhalb lackierter Außenflächen angeordnet.

Wie weiter oben schon erwähnt, ist das torsionale Ultraschallschweißverfahren in der EP 1 930 148 A1 beschrieben. Unter torsional wird eine Schwingung einer Sonotrode um ihre Längsachse oder Torsionsachse verstanden, das heißt, die Sonotrode führt eine torsionale Bewegung um eine Torsionsachse aus, welche im Wesentlichen senkrecht auf der Ebene der zu bildenden Schweißnaht steht. Die Torsionsachse liegt somit im Wesentlichen parallel zur Kraftachse, mit welcher die Sonotrode auf das Anbauteil gedrückt wird.

Nachfolgend wird die Erfindung an Hand von Figuren näher erläutert.

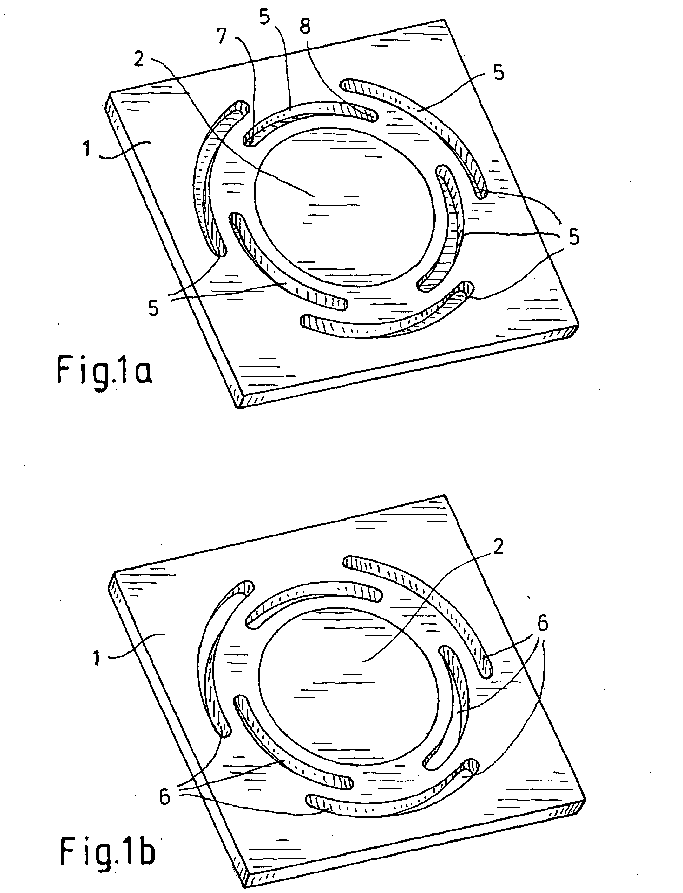

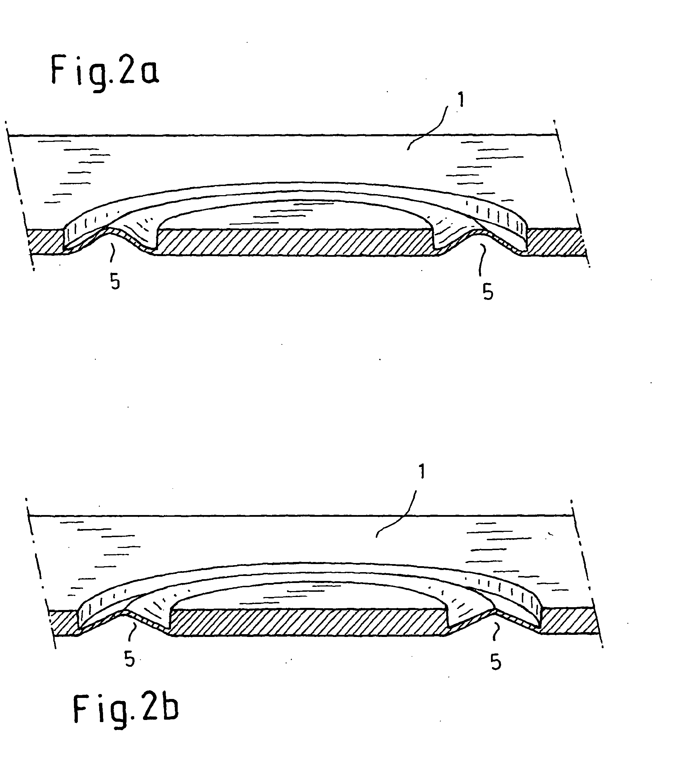

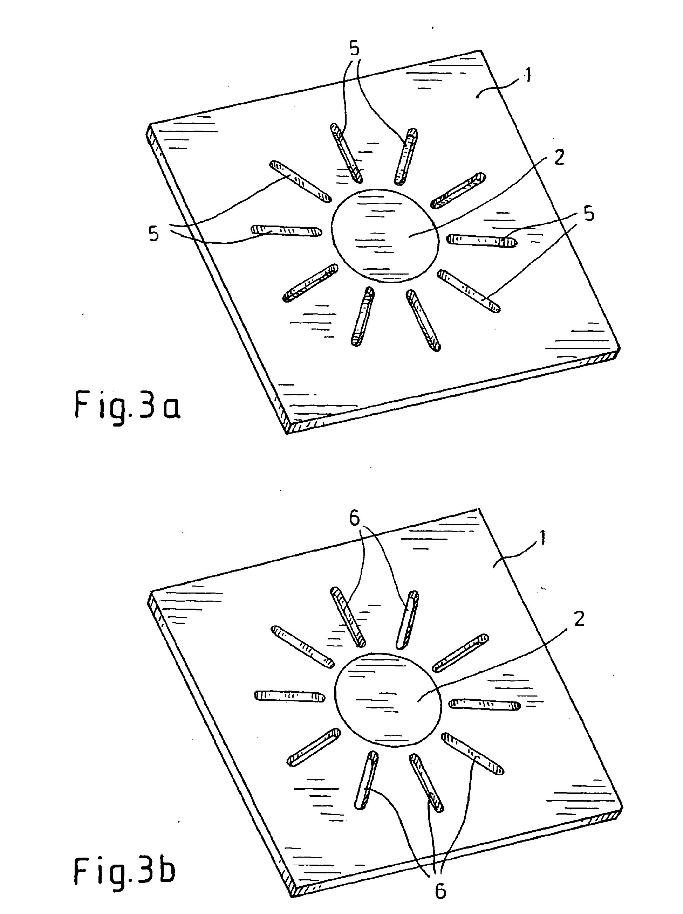

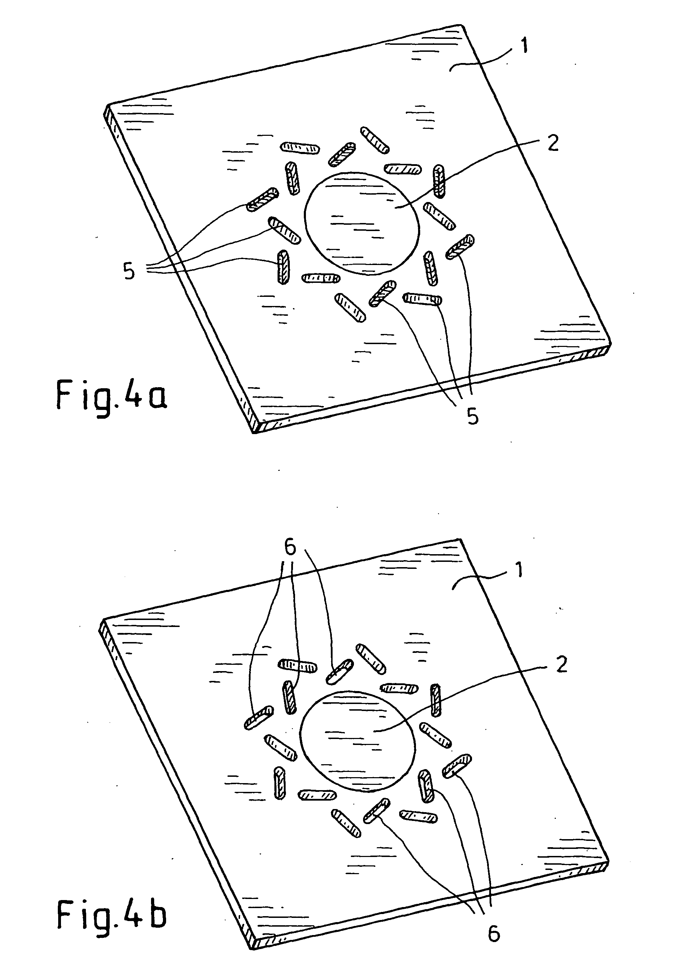

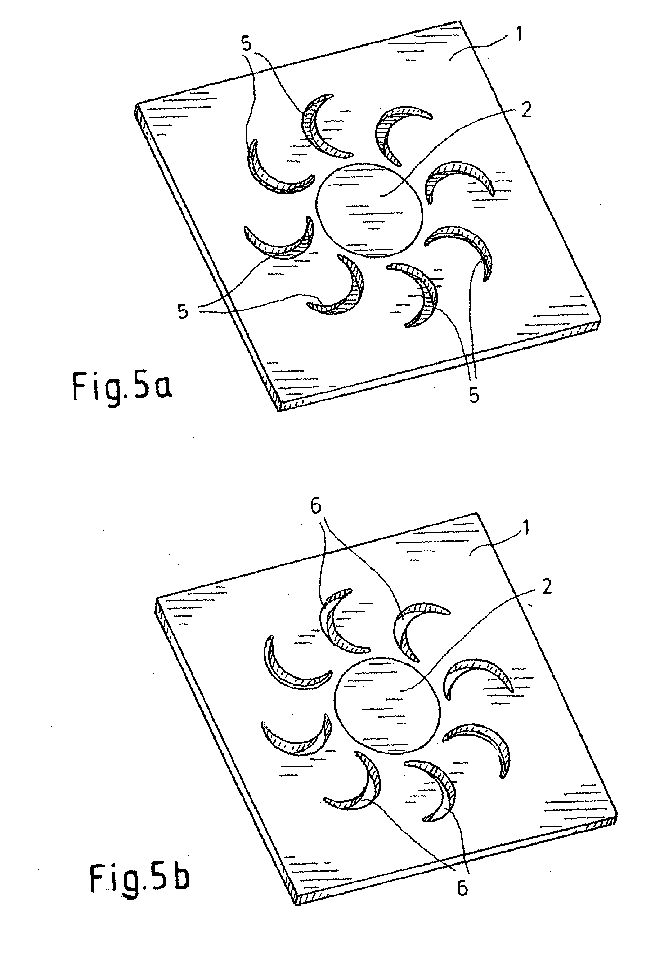

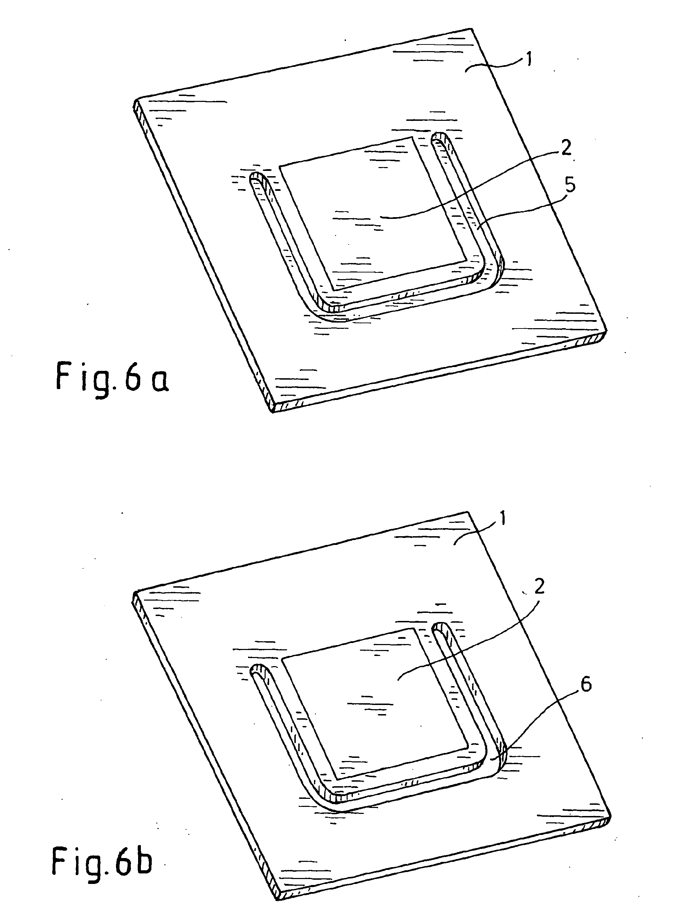

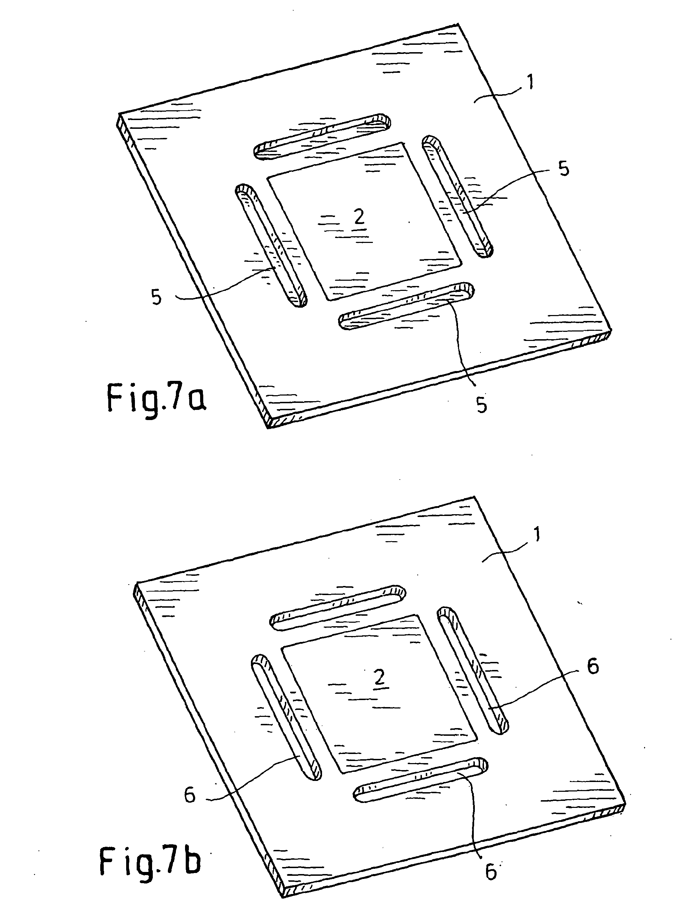

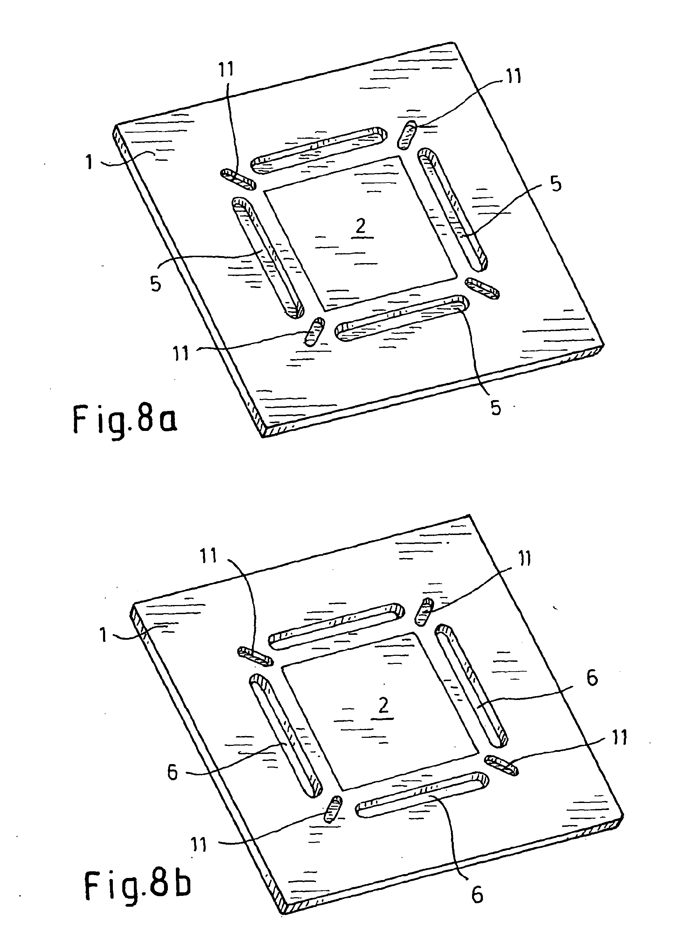

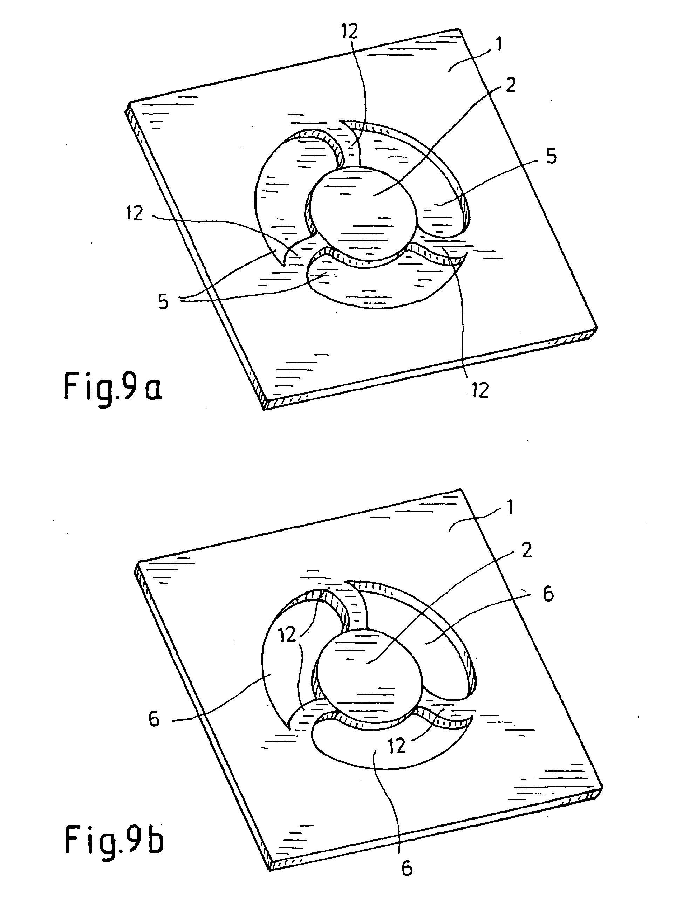

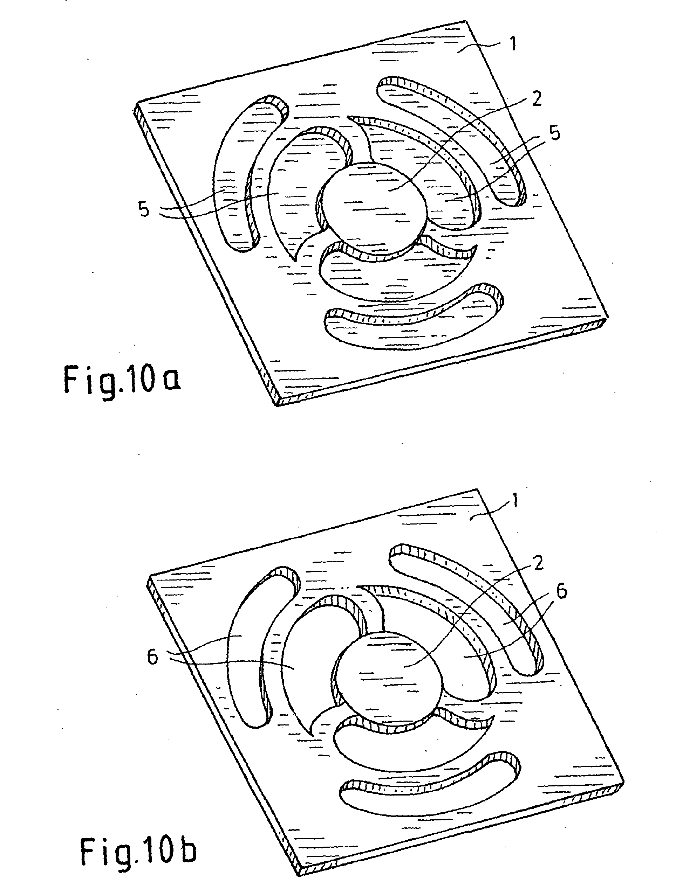

Die Figur 1 bis 10 zeigen erfindungsgemäße Anbauteile 1 mit Schweißstellen 2, die schwingungstechnisch vom Rest des Anbauteils 1 entkoppelt sind. Die Teil-Figuren a zeigen, bis auf die Figur 2, lokale Ausdünnungen 5 um die Schweißstellen 2 herum, so dass die Schweißstellen 2 schwingungstechnisch vom Rest des Anbauteils 1 entkoppelt sind.

Die Teil-Figuren b der Figuren 1 bis 10 zeigen, bis auf die Figur 2, lokale Durchbrüche 6 um die Schweißstelle 2 herum, so dass die Schweißstellen 2 schwingungstechnisch vom Rest des Anbauteils 1 entkoppelt sind. Die Ausführungsformen sind denen von den Figuren a identisch, bis darauf, dass anstelle der Ausdünnungen 5 Durchbrüche 6 um die Schweißstellen 2 herum angeordnet sind.

Die Ausdünnungen 5 in Figur 1a sind koaxial um die Schweißstelle 1 herum versetzt angeordnet und nehmen in ihrer Tiefe von einer Anfangstiefe 7 zu einer

Endtiefe 8 stetig zu oder ab. Ebenso sind gemäß Figur 1b die Durchbrüche 6 koaxial um die Schweißstelle 1 herum versetzt angeordnet.

Figur 3a zeigt radiale Ausdünnungen 5, die strahlenförmig um die Schweißstelle 2 herum angeordnet sind. In Figur 3b sind es Durchbrüche 6, die strahlenförmig um die Schweißstelle 2 herum angeordnet sind.

Die Figuren 4a und 4b zeigen längliche stiftförmige Ausdünnungen 5 und Durchbrüche 6, die jeweils versetzt zueinander angeordnet und zum Teil tangential zur Schweißstelle 2 verlaufen.

Die Figuren 5a und 5b zeigen sichelförmige Ausdünnungen 5 und Durchbrüche 6, die radial zur Schweißstelle 2 angeordnet sind.

Die Figuren 6a und 6b zeigen eine U-förmige Ausdünnung 5 und einen U-förmigen Durchbruch 6, wobei die Schweißstelle 2 zwischen den drei Schenkeln der U-förmigen Ausdünnung 5 und Durchbruch 6 angeordnet ist.

Die Figuren 7a und 7b zeigen vier längliche stiftförmige Ausdünnungen 5 und Durchbrüche 6, die parallel zu den Seiten der Schweißstelle 2 verlaufen und deren Länge jeweils der Länge einer Seite der Schweißstelle 2 beträgt.

Die Figuren 8a und 8b zeigen vier längliche stiftförmige Ausdünnungen 5 und Durchbrüche 6, wie schon in den Figuren 7a, 7b gezeigt, jedoch befinden sich an den Ecken der Schweißstellen 2 zusätzlich jeweils eine radial verlaufende Verdünnung 11.

Die Figuren 9a und 9b zeigen drei sichelförmige Ausdünnungen 5 und Durchbrüche 6 um die Schweißstelle 2 herum, wobei der Rest des Anbauteils 1 über drei ebenfalls sichelförmige Stege 12 mit der Schweißstelle 2 verbunden sind. Die Figuren 10a und 10b zeigen die drei sichelförmigen Ausdünnungen 5 und Durchbrüche 6 von den Figuren 9a, 9b kombiniert mit den koaxialen Ausdünnungen und Durchbrüchen gemäß der Figuren 1a, 1 b.

Figur 2a zeigt eine in Umfangsrichtung um die Schweißstelle 2 herum angeordnete im Querschnitt wellenförmige Ausdünnung 5. Figur 2b zeigt eine in Umfangsrichtung um die Schweißstelle 2 herum angeordnete im Querschnitt zickzackförmige Ausdünnung 5. Auch ziehharmonikaförmige Ausdünnungen 5 sind vorteilhaft.

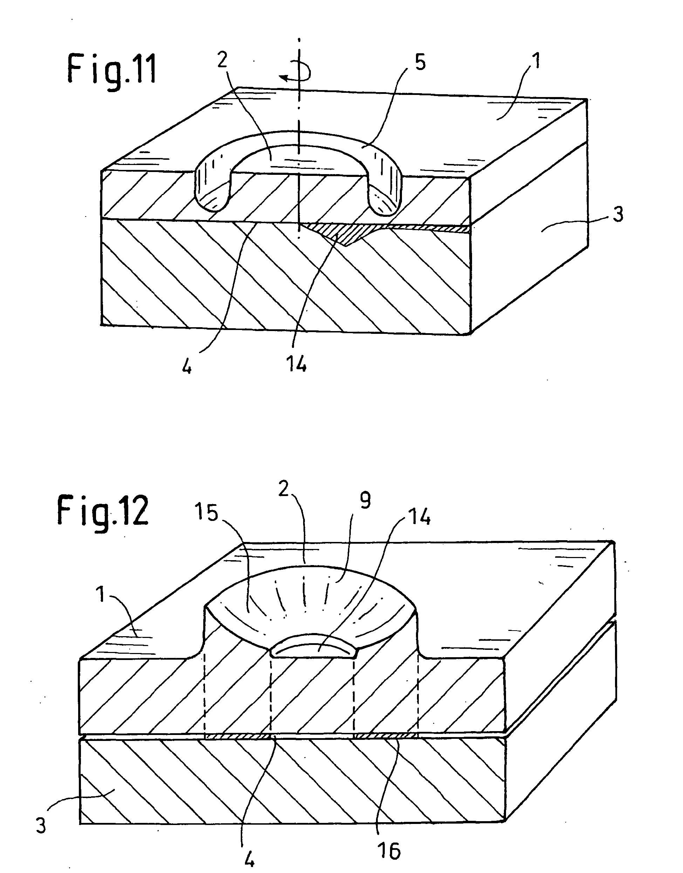

Figur 11 zeigt ein erfindungsgemäßes Anbauteil 1 mit einer die Schweißstelle 2 koaxial umgebenden Ausdünnung 5, die als Ringnut ausgebildet ist. Das Anbauteil 1 ist zur Verschweißung auf ein Bauteil 3 gelegt. Die Trennebene 4 bildet den Kontaktbereich des Anbauteils 1 mit dem Bauteil 3. Zum Verschweißen mit dem torsionalen Ultraschallschweißverfahren wird eine Sonotrode auf die Schweißstelle 2 gesetzt. Als Folge der durch die Sonotrode eingebrachten Energie schmilzt die Trennebene 4 und verschweißt das Anbauteil 1 mit dem Bauteil 3.

Die von der Sonotrode eingebrachte Energie wird gemäß der durch das Bezugszeichen 14 gekennzeichneten Kurve aufgenommen. Gut zu erkennen ist, dass koaxial außerhalb der Ausdünnung 5 nur wenig Energie aufgenommen wird.

Durch die hohe lokale Energieeinbringung im Bereich der Schweißstelle 2, die schwingungstechnisch so verändert ist, dass sie vom umgebenden Bereich des Anbauteils 1 entkoppelt ist, und so von der Sonotrode unabhängig vom umgebenden Bereich in Schwingungen versetzt werden kann, ist die Verschweißung erst möglich.

Der Fachmann weiß, dass beliebige Durchbrüche 6 und/oder Ausdünnungen 5 eingebracht werden können, sie müssen nur das schwingungstechnische Entkoppeln sicherstellen.

In einer weiteren vorteilhaften Ausführungsform wird vorgeschlagen, die zur Einkopplung nutzbare Fläche zwischen Sonotrode und Anbauteil zu vergrößern. Je größer diese Fläche ist, desto besser ist der Eingriff der Sonotrode und umso besser ist die Einkopplung der Schwingung in das Anbauteil gewährleistet. Bevorzugt weist hierzu die Oberfläche der Schweißstelle und/oder der die Schweißstelle umgebende Rand eine gegenüber einer ebenen Fläche vergrößerte nutzbare Einkopplungsfläche für die Sonotrode auf. Vorteilhaft ist die Bauteilform des Anbauteils im Bereich des Aufsatzpunktes der Sonotrode an die Kontur einer nicht ebenen Sonotrode angepasst. Die Sonotrode muss hierfür angepasst werden. Diese Ausführungsform kann zusätzlich oder ohne die erfindungsgemäße schwingungstechnische Entkopplung der Schweißstelle 2 auf dem Anbauteil 1 von der restlichen Fläche des Anbauteils 1 benutzt werden.

Figur 12 zeigt ein Anbauteil 1 zur Verschweißung auf ein Bauteil 3 aufgelegt. Zur Vergrößerung der Einkopplungsfläche 9 ist die Oberfläche und/oder deren Randbereich der Schweißstelle 9 vergrößert. Wie hier gezeigt, kann die Schweißstelle 2 vorteilhaft kraterförmig ausgebildet sein mit einer mittleren ebenen Fläche 14 und einer konkaven Außenfläche 15. Besonders vorteilhaft ist es, wenn die Einkopplungsfläche 9 größer ist als die Wirkfläche 16. Mit Wirkflächefläche 16 wird die Fläche unterhalb der Auflagefläche der Sonotrode oder der Schweißstelle 2 verstanden, d.h. die Fläche, die an der der Sonotrode abgewandten Unterseite des Anbauteils 1 angeordnet ist.

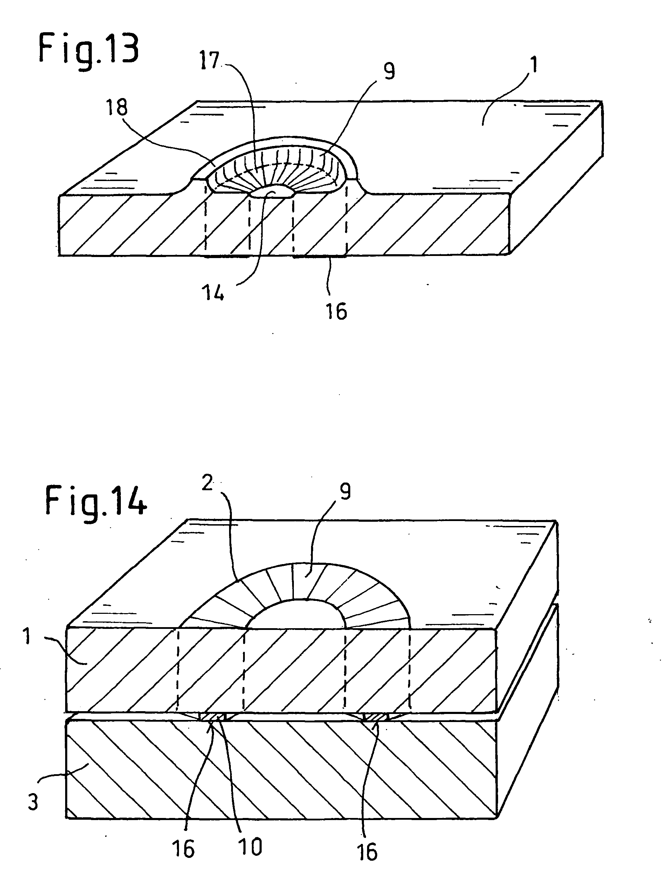

Figur 13 zeigt ein Anbauteil 1 mit einer mittleren ebenen Fläche 14, die in eine nahezu ebene Auflagefläche 17 für die Sonotrode übergeht und mit einen erhabenen Randbereich 18. Auch hier ist die Einkopplungsfläche 9 größer ist als die Wirkfläche 16. Diese Ausführungsform kann zusätzlich oder ohne die erfindungsgemäße schwingungstechnische Entkopplung der Schweißstelle 2 auf dem Anbauteil 1 von der restlichen Fläche des Anbauteils 1 benutzt werden.

Figur 14 zeigt eine Ausführungsform, bei der die Wirkfläche 16 an der dem Aufsatzpunkt der Sonotrode gegenüberliegenden Seite eine gegenüber einer ebenen Fläche verkleinerte Auflagefläche aufweist. Um dies zu erreichen sind auf der Wirkfläche 16 Erhebungen 10 angeordnet. Mit diesen Erhebungen 10 liegt das Anbauteil 1 auf dem Bauteil 3 auf. Dadurch verringert sich die wirksame Reibfläche. Ein schnelleres Aufschmelzen und infolge dessen, ein besseres Verschweißen der Trennebene ist die Folge. Hierbei wird eine Fläche unterhalb der Auflagefläche der Sonotrode über die Ebene der umliegenden Flächen angehoben und dadurch die wirksame Reibfläche verringert. Diese Ausführungsform kann zusätzlich oder ohne die erfindungsgemäße schwingungstechnische Entkopplung der Schweißstelle 2 auf dem Anbauteil 1 von der restlichen Fläche des Anbauteils 1 benutzt werden.

Bevorzugt werden die beschriebenen Anbauteile im Automotivbereich verwendet und dort bevorzugt an Außen- oder Innenteilen aus Kunststoff. Eine bevorzugte Anwendungsform ist das Anschweißen von Anbauteilen an sichtbare Außenteile des Kraftfahrzeugs. Zum Beispiel können mit diesem Verfahren Anbauteile an zum Beispiel einen Stoßfänger oder einen Radkasten angeschweißt werden.

Die Anbauteile werden schon bei der Herstellung so ausgebildet, dass sie problemlos mit dem torsionalen Ultraschallschweißen an Bauteile angeschweißt werden können. Da diese Anpassung der Anbauteile sichtbar ist, kann beurteilt werden, ob diese für die Anwendung des Ultraschallschweißens vorbereitet wurden.

## Patentansprüche

1. Anbauteil (1) mit zumindest einer für eine Verschweißung mit einem Bauteil (3) vorgesehenen Schweißstelle (2), wobei die Verschweißung mit dem an sich bekannten torsionalen Ultraschallschweißverfahren erfolgen soll, bei welchem eine Sonotrode zur Übertragung der den Schweißvorgang erzeugenden Schwingungen auf die Schweißstelle (2) aufgesetzt wird, wodurch die Trennebene (4) zwischen Anbautel (1) und Bauteil (3) schmilzt und das Anbauteil (1) mit dem Bauteil (3) verschweißt, **dadurch gekennzeichnet, dass** die Schweißstelle (2) auf dem Anbauteil (1) schwingungstechnisch von der restlichen Fläche des Anbauteils (1) entkoppelt ist.

2. Anbauteil nach Anspruch 1, **dadurch gekennzeichnet, dass** die Schweißstelle (2) mittels Ausdünnungen (5) und/oder Durchbrüche (6) von der restlichen Fläche entkoppelt ist.

3. Anbauteil nach Anspruch 2, **dadurch gekennzeichnet, dass** die Ausdünnungen (5) und/oder Durchbrüche (6) koaxial um die Schweißstelle (2) herum angeordnet sind.

4. Anbauteil nach einem der vorhergehenden Ansprüche, **dadurch gekennzeichnet, dass** die Ausdünnungen (5) eine Ringnut ist.

5. Anbauteil nach einem der vorhergehenden Ansprüche, **dadurch gekennzeichnet, dass** die Ausdünnungen (5) in ihrer Tiefe von einer Anfangstiefe (7) zu einer Endtiefe (8) stetig zu- oder abnehmen.

6. Anbauteil nach einem der vorhergehenden Ansprüche, **dadurch gekennzeichnet, dass** die Ausdünnungen (5) und/oder Durchbrüche (6) gegeneinander versetzt angeordnet sind.

7. Anbauteil nach einem der vorhergehenden Ansprüche, **dadurch gekennzeichnet, dass** die Schweißstelle (2) von einer U-förmigen Ausdünnung (5) oder Durchbruch (6) umgeben ist.

8. Anbauteil nach einem der vorhergehenden Ansprüche, **dadurch gekennzeichnet, dass** die Schweißstelle (2) von einer in Umfangsrichtung um die Schweißstelle (2) herum angeordneten im Querschnitt gebogenen oder zickzackförmigen Ausdünnung umgeben ist.

9. Anbauteil (1) mit zumindest eine für eine Verschweißung mit einem Bauteil (3) vorgesehenen Schweißstelle (2), wobei die Verschweißung mit dem an sich bekannten torsionalen Ultraschallschweißverfahren durchführbar ist, bei welchem eine Sonotrode zur Übertragung der den Schweißvorgang erzeugenden Schwingungen auf die Schweißstelle (2) aufgesetzt wird, wodurch die Trennebene (4) zwischen Anbautel (1) und Bauteil (3) schmilzt und das Anbauteil (1) mit dem Bauteil (3) verschweißt, insbesondere nach einem der Ansprüche 1 bis 8, **dadurch gekennzeichnet, dass** im Bereich der Schweißstelle (2) die Einkopplungsfläche für die Sonotrode größer ist als die auf der gegenüberliegenden Seite angeordnete Auflagefläche, mit der das Anbauteil (1) auf das Bauteil (3) auflegbar ist.

10. Anbauteil nach einem der vorhergehenden Ansprüche, **dadurch gekennzeichnet, dass** die Oberfläche der Schweißstelle (2) und/oder der die Schweißstelle (2) umgebende Rand eine gegenüber einer ebenen Fläche vergrößerte nutzbare Einkopplungsfläche (9) für die Sonotrode aufweist.

11. Anbauteil nach einem der vorhergehenden Ansprüche, **dadurch gekennzeichnet, dass** die Bauteilform des Anbauteils (1) im Bereich des Aufsatzpunktes der Sonotrode an die Kontur einer nicht ebenen Sonotrode angepasst ist.

12. Anbauteil nach einem der vorhergehenden Ansprüche, **dadurch gekennzeichnet, dass** die Einkopplungsfläche (9) für die Sonotrode durch Abrundung der Aussenkanten, Aufrauhung oder Verzahnung vergrößert ist.

13. Anbauteil nach einem der vorhergehenden Ansprüche, **dadurch gekennzeichnet, dass** das Anbauteil (1) an die dem Aufsatzpunkt der Sonotrode gegenüberliegenden Seite eine gegenüber einer ebenen Fläche verkleinerte Auflagefläche aufweist, wobei bevorzugt auf der Auflagefläche Erhebungen (10) und/oder Vertiefungen angeordnet sind.

14. Anbauteil nach einem der vorhergehenden Ansprüche, **dadurch gekennzeichnet, dass** das Anbauteil (1) und das Bauteil (3) aus Kunststoff bestehen und bevorzugt ein Innen- oder Außenteil eines Kraftfahrzeugs sind.

15. Anbauteil nach einem der vorhergehenden Ansprüche, **dadurch gekennzeichnet, dass** die Verschweißung unterhalb lackierter Außenflächen angeordnet ist.

## Claims

1. An extension component (1) having at least one weld point (2) that is provided for welding with a component (3), wherein the welding is to be effected with the torsional ultrasonic welding method which is known *per se* and in which a sonotrode for the transmission of the vibrations producing the welding action is set onto the weld point (2), whereby the parting plane (4) between the extension component (1) and the component (3) melts, and the extension component (1) welds with the component (3), **characterised in that** the weld point (2) on the extension component (1) is decoupled from the remaining area of the extension component (1) in terms of vibration behaviour.

2. An extension component according to claim 1, **characterised in that** the weld point (2) is decoupled from the remaining area by means of thinned portions (5) and/or break-throughs (6).

3. An extension component according to claim 2, **characterised in that** the thinned portions (5) and/or break-throughs (6) are arranged coaxially around the weld point (2).

4. An extension component according to one of the preceding claims, **characterised in that** the thinned portions (5) constitute an annular groove.

5. An extension component according to one of the preceding claims, **characterised in that** the thinned portions (5) continuously increase or decrease in terms of their depth from an initial depth (7) to a final depth (8).

6. An extension component according to one of the preceding claims, **characterised in that** the thinned portions (5) and/or break-throughs (6) are arranged so as to be offset in relation to each other.

7. An extension component according to one of the preceding claims, **characterised in that** the weld point (2) is surrounded by a U-shaped thinned portion (5) or break-through (6).

8. An extension component according to one of the preceding claims, **characterised in that** the weld point (2) is surrounded by a thinned portion that is curved or zigzag-shaped in cross section and is arranged around the weld point (2) in the circumferential direction.

9. An extension component (1) having at least one weld point (2) that is provided for welding with a component (3), wherein the welding can be carried out with the torsional ultrasonic welding method which is known per se and in which a sonotrode for the transmission of the vibrations producing the welding action is set onto the weld point (2), whereby the parting plane (4) between the extension component (1) and the component (3) melts, and the extension component (1) welds with the component (3), in particular according to one of claims 1 to 8, **characterised in that** in the region of the weld point (2) the coupling-in area for the sonotrode is greater than the contact area that is arranged on the opposite side and with which the extension component (1) can be placed onto the component (3).

10. An extension component according to one of the preceding claims, **characterised in that** the surface of the weld point (2) and/or the edge surrounding the weld point (2) has a useable coupling-in area (9) for the sonotrode that is enlarged in relation to a planar area.

11. An extension component according to one of the preceding claims, **characterised in that** the component shape of the extension component (1) is adapted in the region of the set-down point of the sonotrode to the contour of a non-planar sonotrode.

12. An extension component according to one of the preceding claims, **characterised in that** the coupling-in area (9) for the sonotrode is enlarged by rounding off the outer edges, roughening or toothing.

13. An extension component according to one of the preceding claims, **characterised in that** the extension component (1) has on the side lying opposite the set-down point of the sonotrode a contact area that is diminished in relation to a planar area, wherein elevations (10) and/or depressions are preferably arranged on the contact area.

14. An extension component according to one of the preceding claims, **characterised in that** the extension component (1) and the component (3) consist of plastics material and are preferably an inner or outer portion of a motor vehicle.

15. An extension component according to one of the preceding claims, **characterised in that** the welding is provided underneath lacquered outer surfaces.

## Revendications

1. Elément à rapporter (1), comprenant au moins un emplacement de soudure (2) prévu pour un soudage avec un élément de construction (3), le soudage devant être réalisé par le procédé connu en soi de soudage par ultrasons en torsion, selon lequel une sonotrode, destinée à transmettre les vibrations générant le processus de soudage, est posée sur l'emplacement de soudure (2), ce qui a pour effet que le plan de joint (4) entre l'élément à rapporter (1) et l'élément de construction (3) entre en fusion et soude l'élément à rapporter (1) à l'élément de construction (3), **caractérisé en ce que** l'emplacement de soudure (2) sur l'élément à rapporter (1) est découplé du point de vue de la technique vibratoire de la surface restante de l'élément à rapporter (1).

2. Elément à rapporter selon la revendication 1, **caractérisé en ce que** l'emplacement de soudure (2) et découplé du reste de la surface au moyen de zones amincies (5) et/ou de perçages (6).

3. Elément à rapporter selon la revendication 2, **caractérisé en ce que** les zones amincies (5) et/ou les perçages (6) sont disposés de façon coaxiale autour de l'emplacement de soudure (2).

4. Elément à rapporter selon l'une quelconque des revendications précédentes, **caractérisé en ce que** les zones amincies (5) forment une rainure annulaire.

5. Elément à rapporter selon l'une quelconque des revendications précédentes, **caractérisé en ce que** les zones amincies (5) augmentent ou diminuent de façon continue en profondeur, à partir d'une profondeur initiale (7) jusqu'à une profondeur finale (8).

6. Elément à rapporter selon l'une quelconque des revendications précédentes, **caractérisé en ce que** les zones amincies (5) et/ou les perçages (6) sont disposés en étant décalés les uns par rapport aux autres.

7. Elément à rapporter selon l'une quelconque des revendications précédentes, **caractérisé en ce que** l'emplacement de soudure (2) est entouré d'une zone amincie (5) ou d'un perçage (6) en forme de U.

8. Elément à rapporter selon l'une quelconque des revendications précédentes, **caractérisé en ce que** l'emplacement de soudure (2) est entouré d'une zone amincie de section incurvée ou en zigzag, disposée dans la direction circonférentielle autour du point de soudage (2).

9. Elément à rapporter (1) comprenant au moins un emplacement de soudure (2) prévu pour un soudage avec un élément de construction (3), le soudage pouvant être réalisé par le procédé connu en soi de soudage par ultrasons en torsion, selon lequel une sonotrode, destinée à transmettre les vibrations générant le processus de soudage, est posée sur l'emplacement de soudure (2), ce qui a pour effet que le plan de joint (4) entre l'élément à rapporter (1) et l'élément de construction (3) entre en fusion et soude l'élément à rapporter (1) à l'élément de construction (3), en particulier selon une des revendications 1 à 8, **caractérisé en ce que** dans la région de l'emplacement de soudure (2), la surface de couplage pour la sonotrode est plus grande que la surface d'appui qui est prévue sur la face opposée et par laquelle l'élément à rapporter (1) peut être posé sur l'élément de construction (3).

10. Elément à rapporter selon l'une quelconque des revendications précédentes, **caractérisé en ce que** la surface de l'emplacement de soudure (2) et/ou le bord entourant l'emplacement de soudure (2) présente une surface de couplage (9) utilisable pour la sonotrode qui est agrandie par rapport à une surface plane.

11. Elément à rapporter selon l'une quelconque des revendications précédentes, **caractérisé en ce que** dans la région du point d'appui de la sonotrode, la forme de l'élément de construction de l'élément à rapporter (1) est adaptée au contour d'une sonotrode non plane.

12. Elément à rapporter selon l'une quelconque des revendications précédentes, **caractérisé en ce que** la surface de couplage (9) pour la sonotrode est agrandie en arrondissant les arêtes extérieures, en rendant la surface rugueuse ou en prévoyant des dents.

13. Elément à rapporter selon l'une quelconque des revendications précédentes, **caractérisé en ce que** sur la face opposée au point d'appui de la sonotrode, l'élément à rapporter (1) présente une surface d'appui qui est réduite par rapport à une surface plane, des protubérances (10) et/ou des creux étant de préférence disposés sur la surface d'appui.

14. Elément à rapporter selon l'une quelconque des revendications précédentes, **caractérisé en ce que** l'élément à rapporter (1) et l'élément de construction (3) sont en matière plastique et sont de préférence un élément intérieur ou un élément extérieur d'un véhicule automobile.

15. Elément à rapporter selon l'une quelconque des revendications précédentes, **caractérisé en ce que** la soudure est placée sous des surfaces extérieures peintes.
